(19) **Europäisches Patentamt**

**European Patent Office**

**Office européen des brevets**

(11) Veröffentlichungsnummer: **0 202 560**

**A2**

(12) # EUROPÄISCHE PATENTANMELDUNG

(21) Anmeldenummer: **86106372.5**

(51) Int. Cl.⁴: **G04F 3/04**

(22) Anmeldetag: **09.05.86**

(30) Priorität: **22.05.85 DE 8515099 U**

(43) Veröffentlichungstag der Anmeldung:
**26.11.86 Patentblatt 86/48**

(84) Benannte Vertragsstaaten:
**CH DE FR GB IT LI NL**

(71) Anmelder: **Braun Aktiengesellschaft**
**Rüsselsheimer Strasse 22**
**D-6000 Frankfurt/Main(DE)**

(72) Erfinder: **Kressner, Gerhard**
**Ringstrasse 46**
**D-6472 Altenstadt 1(DE)**

(74) Vertreter: **Einsele, Rolf**
**Braun Aktiengesellschaft Postfach 1120**
**Frankfurter Strasse 145**
**D-6242 Kronberg Taunus(DE)**

(54) **Einstellscheibe.**

(57) Bei einer Einstellscheibe (1) an einem Kurzzeitwecker ist der Zeiger (4) über ein Zwischenstück (17) mit der Abdeckkappe (6) verbunden. Zur Aufnahme des Zwischenstückes (17) ist das Deckglas (3) im Bereich der Abdeckkappe (6) in geeigneter Weise ausgespart. Ebenso ist eine Durchtrittsmöglichkeit für den Zeiger (4) in der Nabe (5) vorgesehen. Der Zeiger (4) kann so in einfacher Weise zusammen mit der Abdeckkappe (6) in das Deckglas (3) eingesetzt werden.

# FIG.5

EP 0 202 560 A2

Einstellscheibe

Die Erfindung betrifft eine Einstellscheibe gemäß dem Oberbegriff des Patentanspruchs 1.

Derartige Einstellscheiben sind insbesondere von Kurzzeitweckern und Sendereinstellscheiben an Radiogeräten bekannt. Die Einstellscheibe besteht aus einem Deckglas, in dessen Mitte eine Nabe ausgebildet ist, die auf eine Achse aufgesteckt wird. Zum Drehen der Einstellscheibe ist das Deckglas in einen Rand eingefaßt, der zur Erhöhung der Griffigkeit meist gerändelt ist. An der Innen-oder Unterseite des Deckglases ist ein Zeiger vorgesehen, der sich von der Nabe zum Rand erstreckt. Zusätzlich ist die Nabe aus optischen Gründen an der Oberseite des Deckglases mit einer Abdeckkappe versehen. Dadurch, daß das Deckglas durchsichtig ist, läßt sich die zugehörige Skala, auf die der Zeiger durch Verdrehen der Einstellscheibe eingestellt wird, unterhalb der Einstellscheibe auf der Gehäusewand des Gerätes anordnen.

Das Befestigen des Zeigers an der Unterseite des Deckglases ist sehr aufwendig und ein kostenintensiver Arbeitsgang.

Es ist deshalb Aufgabe der Erfindung eine Einstellscheibe zu schaffen, bei der der Zeiger in einfacher Weise und sicher befestigt werden kann.

Die Aufgabe der Erfindung wird durch die Merkmale des kennzeichnenden Teils des Patentanspruchs 1 gelöst.

Gemäß der Erfindung ist der Zeiger über ein Zwischenstück mit der Abdeckkappe verbunden. Zur Aufnahme des Zwischenstückes ist das Deckglas im Bereich der Abdeckkappe in geeigneter Weise ausgespart. Ebenso ist eine Durchtrittsmöglichkeit für den Zeiger in der Nabe vorgesehen. Der Zeiger kann so in einfacher Weise zusammen mit der Abdeckkappe in das Deckglas eingesetzt werden. Die Zusammenbauzeit verringert sich dadurch erheblich.

Gemäß einer Weiterbildung ist zusätzlich ein Stift an der Unterseite der Abdeckkappe ausgebildet. Mittels des Stiftes vereinfacht sich die Befestigung der gesamten Einheit aus Abdeckkappe, Zwischenstück und Zeiger. Vorzugsweise enthält der Stift an seinem freien Ende einen Randwulst, der zur Befestigung mit einer Kante in Eingriff kommt und diese hinterschneidet. Weiter ist der Stift vorzugsweise in der Mitte der Abdeckplatte angeordnet und kürzer als das Zwischenstück.

Nachfolgend wird die Erfindung anhand der Zeichnung näher beschrieben. Es zeigen:

Fig. 1 eine bekannte Einstellscheibe;

Fig. 2 einen Schnitt durch die Einstellscheibe aus Fig. 1 längs des Zeigers;

Fig. 3A eine Ansicht von unten auf eine Einstellscheibe nach der Erfindung;

Fig. 3B eine Ansicht von unten auf den Zeiger nach der Erfindung;

Fig. 4A eine Seitenansicht des Zeigers nach der Erfindung;

Fig. 4B einen Schnitt durch die Einstellscheibe nach der Erfindung längs des Zeigers und

Fig. 5 einen Schnitt durch eine Einstellscheibe nach der Erfindung, in die der Zeiger eingesetzt ist.

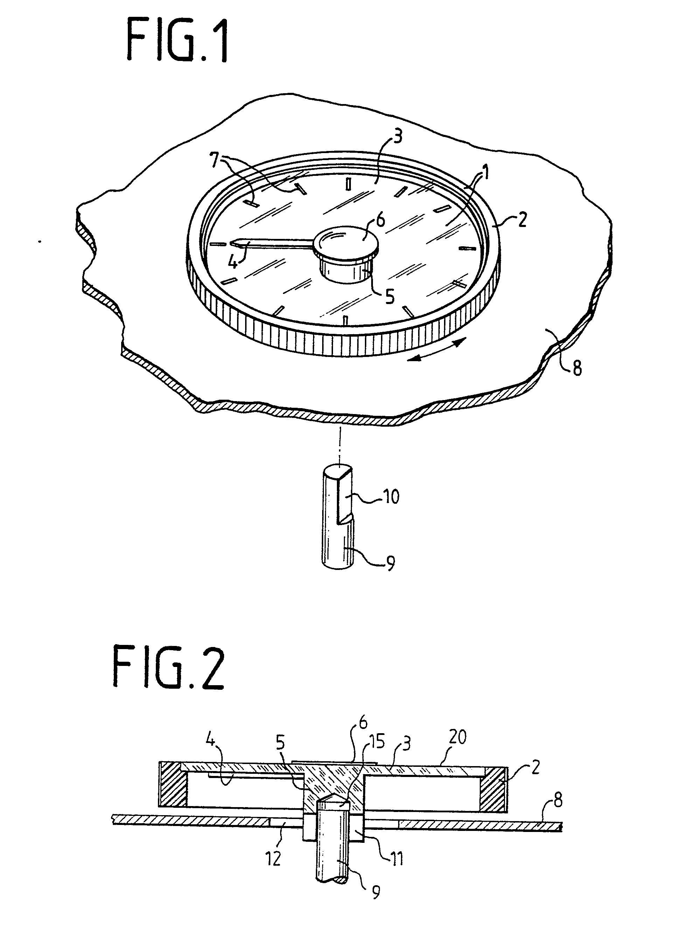

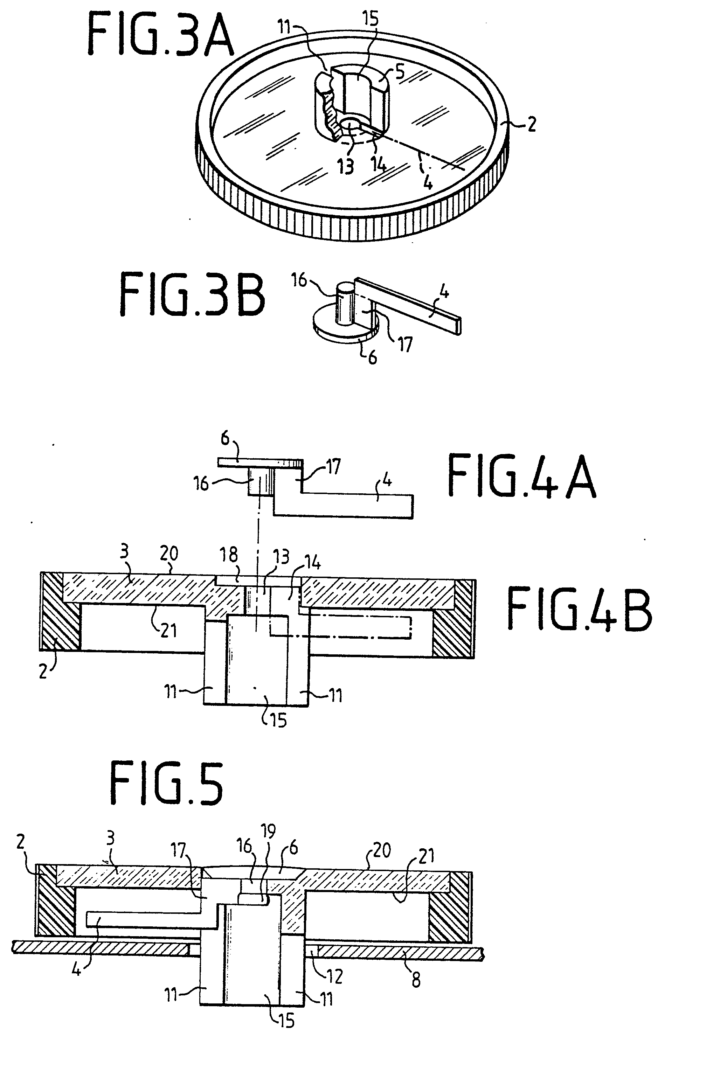

Fig. 1 zeigt eine bekannte Einstellscheibe 1 mit einem Rand 2, der ein durchsichtiges Deckglas 3 einfaßt. Der Rand 2 ist zur Erhöhung der Griffigkeit gerändelt oder in geeigneter Weise mit Rifen versehen. In der Mitte des Deckglases ist an dessen Unterseite (21) -vgl. Fig. 2 -eine Nabe 5 mit einer Achsbohrung 15 vorgesehen, die auf eine Achse 9 gesteckt wird. Die Achse 9 weist eine Abflachung 10 auf, die die Einstellscheibe 1 gegen Verdrehen auf der Achse 9 sichert. Von der Nabe 5 erstreckt sich eine Zeiger 4 auf den Rand 2, wobei der Zeiger 4 an der Unterseite 21 des Deckglases 3 z.B. durch Verkleben befestigt ist. Der Nabenbereich wird durch eine Abdeckkappe 6 im Design verbessert.

Wie aus Fig. 2, die einen Schnitt durch die bekannte Einstellscheibe 1 aus Fig. 1 zeigt, zu ersehen ist, ragt die Achse 9 durch eine Gehäusewandbohrung 12 einer Gehäusewand 8. Auf der Oberseite der Gehäusewand 8 ist in dem Bereich, den die Einstellscheibe 1 abdeckt, eine Skale 7 aufgebracht. Durch Drehen an dem Rand 2 der Einstellscheibe 1 läßt sich der Zeiger 4 auf eine bestimmte Skalenposition einstellen und mit dem Einstellen des Zeigers 4 wird ein nicht gezeigtes Stellglied über die Achse 9 auf einen bestimmten Wert eingestellt. Zur Befestigung der Einstellscheibe 1 weist die Nabe 5 zwei Schlitze 11 auf.

Die geschlitzte Nabe 5 wird durch einen Spannfederring an die Achse 9 gepreßt, wodurch die Einstellscheibe 1 gegen Längsschiebung gesichert ist.

Fig. 3A und 3B zeigt eine Einstellscheibe 1 und einen Zeiger 4 gemäß der Erfindung in der Ansicht von unten. Der Zeiger 4 ist über ein Zwischenstück 17 mit der Abdeckkappe 6 verbunden. Das Zwischenstück 17 steht senkrecht auf der Unterseite der Abdeckkappe 6 und greift gleichfalls an dem Ende des Zeigers 4 senkrecht an, das in dem Bereich der Nabe 5 liegt. Die Höhe des Zwischenstücks 17 entspricht mindestens der Dicke des Deckglases 3. Zusätzlich ist in Fig. 3B an der Unterseite der Abdeckkappe 6 ein Stift 16 ausgebildet, der die Festigkeit der Verbindung Zwischenstück/Abdeckkappe erhöht, wenn er an dem Zwischenstück 17 anliegt. Vorzugsweise liegt der Stift 16 in der Mitte der Abdeckkappe 6 und das Zwischenstück 17 erstreckt sich von dem Stift 16 bis zum Rand der Abdeckkappe 6. Somit bildet der Zeiger 4 mit dem Zwischenstück 17 ein L-förmiges Teil, wobei vorzugsweise der kurze Abschnitt dem Zwischenstück 17 entspricht, das an der Abdeckkappe 6 befestigt ist.

Damit die Einheit aus dem Zeiger 4, dem Stift 16 und der Abdeckkappe 6 in der Mitte des Deckglases 3 einsetzbar ist, weist das Deckglas 3 entsprechende Durchbrüche und Aussparungen auf. Die Bohrung 13 wird daher von dem Stift 16 ausgefüllt und die Aussparung 14 dient zur Aufnahme des Zwischenstücks 17.

Der Schlitz 11 in der Nabe 5, der sich in Richtung des Zeigers erstreckt, ist neben der zuvorbeschriebenen Klemmbefestigung der Einstellscheibe 1 auf der Achse 9 erforderlich, um beim Einsetzen des Zeigers 4 dessen Durchführung und Ausrichtung zuzulassen. Die Nabe 5 kann zum Durchtritt des Zeigers 4 auch eine Querbohrung aufweisen.

Fig. 4A zeigt einen Schnitt durch die Einstellscheibe 1 und Fig. 4B eine Seitenansicht des Zeigers 4. An der Oberseite 20 des Deckglases 3 ist eine Vertiefung 18 für die Abdeckkappe 6 vorgesehen. Die Abdeckkappe 6 kann so mit der Oberseite 20 bündig eingesetzt werden. Nach dem Einsetzen der Einheit nimmt der Zeiger 4 die strichpunktiert angedeutete Ausrichtung an (vgl. auch Fig. 3A). Hierbei dient der Stift 16 zum sicheren Befestigen der gesamten Einheit. Zum Einsetzen wird der Zeiger 4 mit der Spitze voran schräg in die Aussparung 14 bis zum Zwischenstück 17 eingeschoben. Anschließend wird der Stift 16 auf die Bohrung 13 ausgerichtet und durch Druck auf die Abdeckkappe 6 eingepreßt. Der Zeiger 4 kommt dabei an der Unterseite 21 des Deckglases 3 in die angedeutete Lage. Zum Einführen des Zeigers 4 sind der Stift 16 und das Zwischenstück 17 so bemessen, daß ein Ausrichten und Eindrücken der gesamten Einheit aus Zeiger 4, Stift 16 und Zwischenstück 17 möglich ist. Vorzugsweise ist der Stift 16 hierzu in der Höhe kürzer als das Zwischenstück 17, weshalb der Stift nach dem Einführen der Einheit in Schräglage leicht zum Eindrücken auf die Achse der Bohrung 13 ausgerichtet werden kann.

Fig. 5 zeigt die Einstellscheibe 1 mit dem eingesetzten Zeiger 4, wobei die Abdeckkappe 6 am Rand konisch abgeschrägt ist. An dem freien Ende des Stiftes 16, das in den Raum ragt, den die Achsbohrung 15 ausbildet, ist ein Randwulst 19 vorgesehen. Der Randwulst 19 hinterschneidet die Kante der Bohrung 13, die in Raum der Achsbohrung 15 mündet. Der Stift 16 wird so eingeschnappt und die gesamte Einheit sicher gehalten. Klebeverbindungen sind hierzu nicht erforderlich. Wie in der vorausgehenden Zeichnung 4B ist das Zwischenstück 17 etwas höher als die Dicke des Deckglases 3, weshalb der Zeiger 4 einen Abstand zu der Unterseite 20 des Deckglases 3 aufweist und sich leichter einsetzen läßt.

**Ansprüche**

1. Einstellscheibe mit einem Rand, einem Deckglas, das durch den Rand eingefaßt wird, einem Zeiger, der an der Unterseite des Deckglases ausgebildet ist und der sich vom Drehzentrum der Einstellscheibe zum Rand erstreckt, einer Nabe, die an der Unterseite des Deckglases im Drehzentrum angeordnet ist und die zur Befestigung der Einstellscheibe auf einer Achse dient, und mit einer Abdeckkappe, die an der Oberseite des Deckglases im Drehzentrum befestigt ist, dadurch gekennzeichnet, daß der Zeiger (4) über ein Zwischenstück (17) mit der Abdeckkappe (6) verbunden ist und daß das Deckglas (3) eine Aussparung (14) und die Nabe (5) Schlitze (11) zur Aufnahme und zum Durchführen des Zeigers (4) an dem Zwischenstück (17) aufweist.

2. Einstellscheibe nach Anspruch 1, dadurch gekennzeichnet, daß in dem Deckglas (3) zusätzlich zu der Aussparung (14) eine Bohrung (13) vorgesehen ist, die zur Aufnahme eines Stiftes (16) dient, der an der Unterseite der Abdeckkappe (6) ausgebildet ist.

3. Einstellscheibe nach Anspruch 2, dadurch gekennzeichnet, daß der Stift (16) mit dem Zwischenstück (17) verbunden ist, um die mechanische Festigkeit der Verbindung des Zwischenstückes (17) mit der Abdeckkappe zu erhöhen.

4. Einstellscheibe nach Anspruch 2, dadurch gekennzeichnet, daß der Stift (16) an seinem freien Ende einen Randwulst (19) aufweist, der zur Befestigung des Stiftes (16) eine Kante hinterschneidet.

5. Einstellscheibe nach Anspruch 2, dadurch gekennzeichnet, daß der Stift (16) in der Mitte der Abdeckkappe (6) ausgebildet ist.

6. Einstellscheibe nach Anspruch 2, dadurch gekennzeichnet, daß der Stift (16) in der Höhe kürzer ist als das Zwischenstück (17).

7. Einstellscheibe nach Anspruch 1, dadurch gekennzeichnet, daß das Deckglas (3) an der Oberseite (20) eine Vertiefung (18) zur Aufnahme der Abdeckkappe (6) aufweist.

# FIG.1

# FIG.2

FIG.3A

FIG.3B

FIG.4A

FIG.4B

FIG.5